# EUROPÄISCHE PATENTSCHRIFT

(11) **EP 4 014 721 B1**
(45) Veröffentlichungstag und Bekanntmachung des Hinweises auf die Patenterteilung: **23.04.2025**
(21) Anmeldenummer: 21213918.2
(22) Anmeldetag: 11.12.2021
(51) Int. Cl.: A01G 27/00, A01G 29/00

(54) **ADAPTER FÜR EINE BEWÄSSERUNGS- UND BELÜFTUNGSVORRICHTUNG FÜR GEHÖLZE UND EINE BEWÄSSERUNGS- UND BELÜFTUNGSVORRICHTUNG MIT DEM ADAPTER**
ADAPTER FOR AN IRRIGATION AND VENTILATION DEVICE FOR WOODY PLANTS AND AN IRRIGATION AND VENTILATION DEVICE WITH THE ADAPTER
ADAPTATEUR POUR UN DISPOSITIF D'IRRIGATION ET D'AÉRATION POUR L'ARBORICULTURE ET DISPOSITIF D'IRRIGATION ET D'AÉRATION POURVU DE L'ADAPTATEUR

(30) Priorität: 15.12.2020 DE 102020133524
(43) Veröffentlichungstag der Anmeldung: 22.06.2022
(73) Patentinhaber: Fabritz, Thorsten A., 47800 Krefeld (DE)
(72) Erfinder: Cegielski, Rafal, 47805 Krefeld (DE)
(74) Vertreter: Schoenen, Norbert

(56) Entgegenhaltungen:
- EP-A1- 1 117 290
- DE-U- 7 400 964
- DE-U1- 202011 107 305
- US-B2- 9 055 718
- US-B2- 9 648 810

## Beschreibung

Die Erfindung betrifft einen Adapter für eine Bewässerungs- und Belüftungsvorrichtung für Gehölze, wobei der Adapter (11) ein Rohrstück (1) mit einem Anschluss-Düsenhalterteil (2) mit einem Durchflussmengenregler (6) aufweist.

### Hintergrund

Die Erfindung betrifft insbesondere einen Adapter für eine Bewässerungs- und Belüftungsvorrichtung für Gehölze mit einer Einlassöffnung für Luft und Wasser nach dem deutschen Gebrauchsmuster DE 20 2011 107 305 U1, und zwar den gesamten Adapter (11) in verschiedenen Längen vom KG-Rohr (1), auch mit Kragen (KG Rohrflansch) (12), wenn die Kundenspezifikation es erfordert.

### Stand der Technik

Bekannt ist eine Bewässerungs- und Belüftungsvorrichtung für Gehölze mit einer Einlassöffnung für Luft und Wasser nach dem deutschen Gebrauchsmuster DE 20 2011 107 305 U1. Die Bewässerungs- und Belüftungsvorrichtung hat große Vorteile. Bei der Anwendung kann es aber vorkommen, dass der Wassereinlass des Systems mit einem Wasserüberschuss verstopft. Außerdem kann Wasser über die Abdeckung spritzen, was z.B. für Fußgänger störend sein könnte. Es müssen ferner schwere und große Bewässerungstanks in die Fußgängerzonen gefahren werden.

Eine Bewässerungsvorrichtung der eingangs genannten Art mit einem Adapter 188 ist aus der US 9 648 810 B2 bekannt. Des Weiteren ist eine Bewässerungsvorrichtung mit einer Durchflussmengenregelung aus der US 8 371 325 B1 bekannt.

### Aufgabe und Lösung der Erfindung

Aufgabe der Erfindung: Es sollen die oben genannten Nachteile des Standes der Technik vermieden werden.

Diese Aufgabe wird erfindungsgemäß durch die Merkmale des Anspruchs 1 gelöst.

### Vorteile der Erfindung

Unter anderem werden die folgenden Vorteile erreicht:
1) Der erfindungsgemäße Adapter (Bewässerungsadapter) ermöglicht die automatische (oder auch manuelle) Steuerung der Wasserversorgung von unterschiedlichen Pflanzenarten wie z.B. Bäumen oder Gehölzen. Die Bewässerung ist ein zunehmender Faktor in städtischen Grünanlagen. Der erfindungsgemäße Adapter ermöglicht bei der Nutzung der bekannten Bewässerungs- und Belüftungsvorrichtung eine genauere und weniger vom Menschen abhängige Bewässerung.
   Dabei liefert das Anschluss-Düsenhalterteil (2) die genaue Wassermenge über einen austauschbaren Durchflussmengenregler (6). Durch die Verwendung von KG-Rohren (1) wird ein Anschluss (3) an die bekannte Bewässerungs- und Belüftungsvorrichtung ermöglicht.
2) Die Erfindung beseitigt auch das Problem, den Wassereinlass der bekannten Bewässerungs- und Belüftungsvorrichtung mit einem Wasserüberschuss zu verstopfen.
   Der erfindungsgemäße Adapter (11) mit den Einzelelementen Anschluss-Düsenhalterteil (2) und KG-Rohr (1) ermöglicht eine effiziente und störungsfreie Wasserversorgung der bekannten Bewässerungs- und Belüftungsvorrichtung mit einer vorgegebenen Wasserflussrichtung (8) und einem Neigungswinkel (9), um das Wasser zu lenken sowie einer Wirbelversorgung (16) der Bewässerungs- und Belüftungsvorrichtung.
3) Die erfindungsgemäße Konstruktion löst auch das Problem des Spritzens von Wasser über der Abdeckung, was z.B. für Fußgänger störend sein könnte. Die Wirbelversorgung (16) des Systems mit Wasser bewirkt, dass es nicht auf Hindernisse prallt und nicht von allen Seiten spritzt. Die erfindungsgemäße Konstruktion führt auch zu einem effizienteren Einsatz von Wasser, da kein Wasser über die Abdeckung spritzen kann.
   Gleichzeitig steht der Anschluss bei einer tangential nach unten gerichteten Einbauweise so wenig wie möglich vom Rohr ab, wodurch die Unfallgefahr (z. B. ein "Hängenbleiben" von Passanten am Anschluss) reduziert wird.
4) Mit dem erfindungsgemäßen Adapter man kann den Durchfluss an die Bedürfnisse und Möglichkeiten der Wasserleitung anpassen und den jeweiligen Wasserbedarf berechnen. Mit einem externen Steuergerät und mit dem austauschbaren Durchflussmengenregler (6) kann somit die Zeit berechnet werden, die zur Abgabe der erforderlichen Wassermenge erforderlich ist.
5) Mit der bekannten Bewässerungs- und Belüftungsvorrichtung nach der DE 20 2011 107 305 U1 und dem erfindungsgemäßen Adapter und einer automatischen Steuerung müssen keine schweren und großen Bewässerungstanks in die Fußgängerzonen gefahren werden. Bei Verwendung des erfindungsgemäßen Adapters (11) ist es nicht erforderlich, die neu gesäten Pflanzen mit anderen technischen Mitteln wie schweren Wassertanks zu betreiben.

Am wichtigsten ist die genaue und überschwemmungslose Wasserversorgung des Bewässerungssystems.

Der Erfinder hat bei der Entwicklung der erfindungsgemäßen Anlage die folgenden technischen Schwierigkeiten in nicht naheliegender Weise überwunden: Das größte Problem bei der Konstruktion des Adapters war die Zufuhr der genauen und kontrollierten Wassermenge in das Bewässerungs- und Belüftungssystem für Pflanzgruben, ohne dabei das System zu verstopfen und/oder zu überschwemmen.

Vorteilhafte Ausgestaltungen der Erfindung sind in den Unteransprüchen angeführt.

So wird vorgeschlagen,
- dass der Adapter (11) eine automatische Steuerung aufweist,
- dass ein inneres Rohrstück innerhalb eines äußeren Rohrstücks angeordnet ist, dass der Innenbereich des inneren Rohrstücks mit dem Innenbereich des äußeren Rohrstücks im Gasaustauch steht und dass die obere Mündung des inneren Rohrstücks als Einlassöffnung sowohl für Luft als auch für Wasser ausgebildet ist,
- dass zum Gasaustausch Öffnungen im Mantel des inneren Rohrstücks vorgesehen sind,
- dass der Auslass des äußeren Rohrstücks nach unten ausgerichtet ist,
- dass der Auslass des inneren Rohrstücks zur Seite hin ausgerichtet ist,
- dass die Einlassöffnung einen Schmutzfilter aufweist,
- dass die Rohrauslässe mit einem T-Stück versehen sind, so dass mehrere Leitungen oder Ringleitungen ermöglicht werden,
- dass das äußere Rohr nach oben verlängerbar ist und/oder mit einer Abschlusskappe versehen werden kann.

### Ausführungsbeispiele

Im Folgenden werden Ausführungsbeispiele der Erfindung anhand von Zeichnungen näher beschrieben. In allen Zeichnungen haben gleiche Bezugszeichen die gleiche Bedeutung und werden daher gegebenenfalls nur einmal erläutert.

Es zeigen
- Figur 1: eine perspektivische Darstellung des erfindungsgemäßen Bewässerungsadapter, im Folgenden als LUWA-Adapter bezeichnet,
- Figur 2: eine Draufsicht auf den LUWA-Adapter nach Figur 1 von oben mit der Richtung des Wasserkreislaufs,
- Figur 3: eine Seitenansicht des LUWA-Adapters nach Figur 1 im Querschnitt mit dem Neigungswinkel, um das Wasser zu lenken,
- Figur 4: ein Explosionsbild vom Anschluss-Düsenhalterteil (2) des LUWA-Adapters nach Figur 1,
- Figur 5: ein Diagramm des gesamten LUWA-Bewässerungs- und Belüftungssystems, wobei eine Komponente davon der Bewässerungsadapter (LUWA-Adapter) (11) ist, und

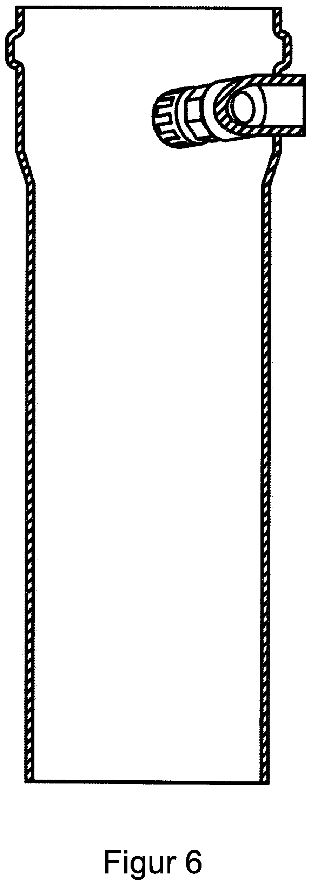

- Figur 6: eine alternative Ausführungsform des erfindungsgemäßen Bewässerungsadapters (LUWA-Adapter) (11) in Schnittdarstellung.

### Aufbau des Adapters für eine Bewässerungs- und Belüftungsvorrichtung für Gehölze

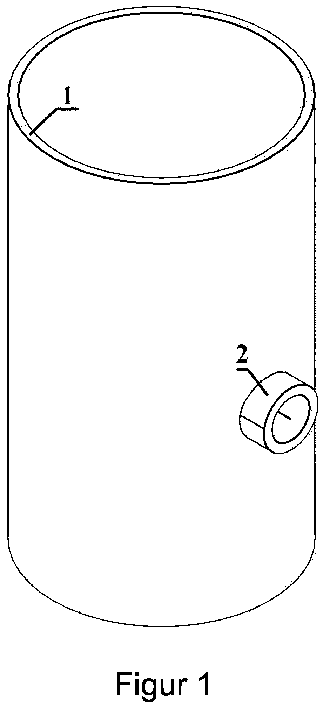

In Figur 1 wird der LUWA-Adapter in perspektivischer Ansicht mit einem sichtbaren Anschluss (2) an eine externe Wasserversorgung gezeigt. Der Adapter basiert auf dem KG-Rohrsystem (1). Dabei steht KG für ein Kanalrohr PVC DN 100 mit einer Länge von ca. 200 mm.

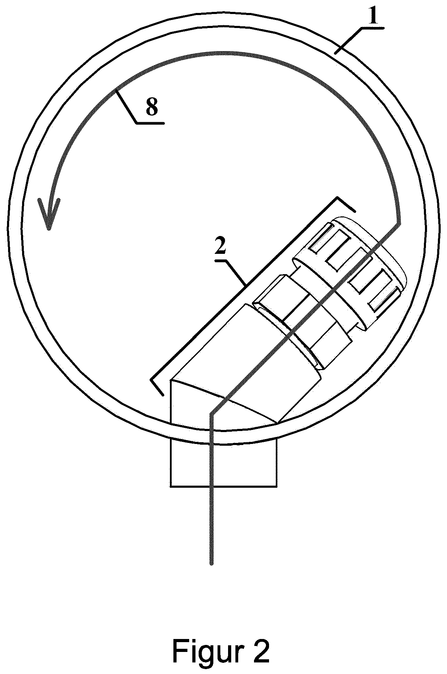

Figur 2 zeigt die Draufsicht. Ein wichtiges Element des Adapters ist der Winkel (9) und die Richtung des auf das Rohr fallenden Wassers (8), nämlich schräg zum Radius und nach unten geneigt. Bei dieser Konstruktion des LUWA-Adapters läuft das überschüssige Wasser nicht nach außen und nach oben (effizientere Bewässerung ohne Verlust). Das Wasser spritzt auch nicht heraus und auf die Fußgänger. Der rotierende Wasserabfluss erhöht die Wasseraufnahmekapazität des Systems. Durch die runde Form des KG-Rohrs (1) ergibt sich die Richtung der Wasserdrehung.

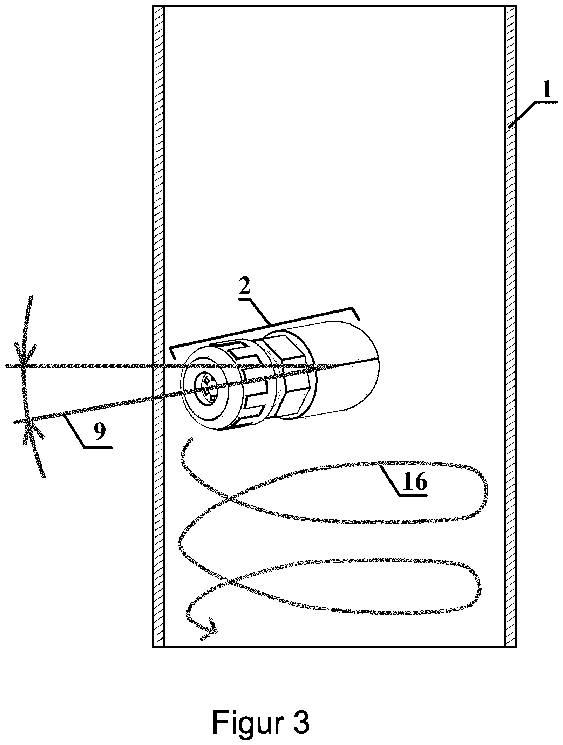

Die Ausrichtung (9) des Anschluss-Düsenhalterteils (2) ist ebenfalls wichtig für den richtigen Rotationswasserabfluss (8, 16) (Figuren 2, 3). Das Wasser windet sich zur Mündung (16) des Systems LUWA (15).

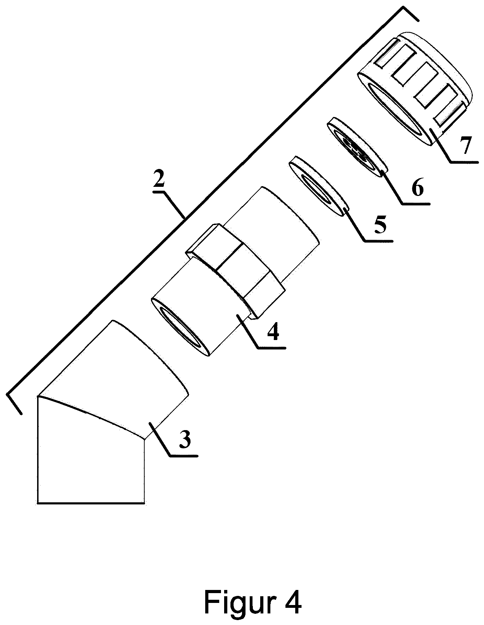

Das Anschluss-Düsenhalterteil (2) besteht aus mehreren Komponenten, von denen jede eine bestimmte Aufgabe ausführt (Figur 4). Das Fitting (3), nämlich der PVC-U Winkel 45°, ist das Verbindungsteil der externen Wasserversorgung und bestimmt auch die richtige Richtung des Wasserauslasses (8, 9). Das Fitting (4) (PVC-U Doppelnippel) erweitert das Element und passt sich der Montage des Durchflussmengenreglers (Düse) (6) an. Die Kappe (7) erleichtert auch etwa das Ersetzen des Durchflussmengenreglers (6). Die Flachdichtung (5) versteift den Durchflussmengenregler (6) und führt zu einer besseren Positionierung zwischen der Abdeckkappe und dem Doppelnippel-Fitting (4). Die austauschbaren Durchflussmengenregler (6) sind auch ein wichtiges Element des Systems, um die Wassermenge steuern und so den Bedarf berechnen zu können. Der letzte Teil des Anschluss-Düsenhalterteils (2) ist die PVC-U Kappe (7) mit einer Auslassöffnung.

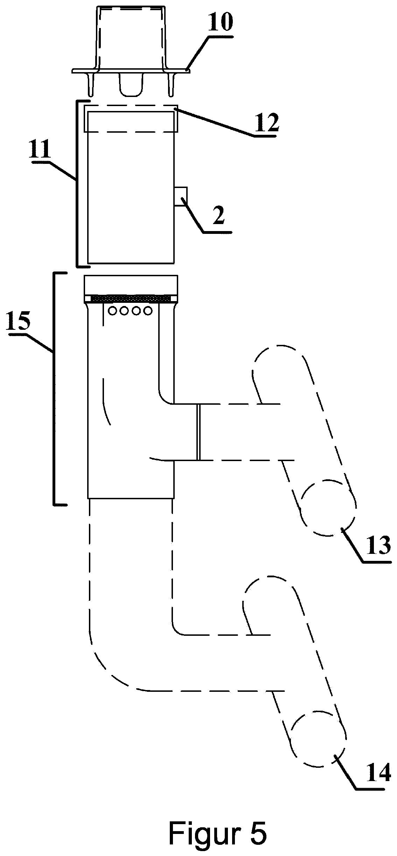

Das LUWA Belüftungs- und Bewässerungssystem besteht aus mehreren Komponenten. Die wichtigste davon ist LUWA (15), die das Wasser zum entsprechenden Abflusskanal leitet, ohne das System menschlichen Fehlern auszusetzen (Figur 5). Das Drainagerohr DN100 (14), in diesem Fall als Belüftungsrohr mit den entsprechenden Abzweige-, Verbinde- oder Endstücken, versorgt das Wurzelsystem mit Luft. Das Drainagerohr DN80 (13), in diesem Fall als Bewässerungsrohr, manchmal mit empfohlenem Mantel und mit dem entsprechenden Abzweiger, Verbinder oder Endstück, versorgt das Wurzelsystem mit Wasser.

Es ist wichtig, diese Rohre nicht zu verwechseln, und dafür wird die LUWA (15) verwendet. Um das gesamte System automatisch zu bewässern, wurde ein LUWA-Adapter (11) mit integriertem Anschluss-Düsenhalterteil (2) und optionalem KG-Rohrflansch (12) erstellt. Eine Abdeckkappe (10) schließt alles von der Oberseite des Systems.

### Arbeitsweise des Adapters für eine Bewässerungs- und Belüftungsvorrichtung für Gehölze

Im Folgenden wird die Arbeitsweise des erfindungsgemäßen Adapters für eine Bewässerungs- und Belüftungsvorrichtung für Gehölze im Detail erläutert:
Schritt 1: Der LUWA-Adapter (11) wird vom oben in das LUWA-Hauptteil (15) eingesteckt.
Schritt 2: An dem Anschluss-Düsenhalterteil (2) wird von außen, also an dem Winkel-Fitting PVC-U (3), der passende Adapter für die entsprechenden Wasserleitung oder den entsprechenden Wasserschlauch angeschraubt.

Empfohlen wird ein geprüfter Anschluss mit einem Winkelstück mit Schlauchanschluss x 1/2 " AG auf einen flexiblen SPX-FLEX-Regneranschlussschlauch, dann an die Wasser-Kreishauptleitung mit einem entsprechenden Anschluss.

Schritt 3: Der LUWA-Adapter (11) wird als Bestandteil des LUWA-Systems (15, 13, 14, 10) ordnungsgemäß zusammen in die Pflanzgrube eingesetzt.

Schritt 4: Dann wird eine Abdeckung (10) von oben installiert.

Schritt 5: Die Abdeckung (10) ermöglicht, falls sie geöffnet werden kann, den Austausch der Durchflussmengenregler (6).

Schritt 6: Die Wasserversorgung kann automatisch oder auch manuell gesteuert werden.

### Bezugszeichenliste

- 1: PVC-Kanalrohr, KG System
- 2: Anschluss-Düsenhalterteil
- 3: Fitting PVC-U Winkel 45°, Innengewinde x Innengewinde
- 4: Fitting PVC-U Doppelnippel, 2fach Außengewinde
- 5: Flachdichtung
- 6: Austauschbare Durchflussmengenregler
- 7: PVC-U Kappe, Innengewinde
- 8: Wasserflussrichtung
- 9: Neigungswinkel, um das Wasser zu lenken
- 10: Abdeckkappe (Teil des gesamten LUWA-Systems)
- 11: LUWA-Adapter (Bewässerungsadapter)
- 12: KG Rohrflansch (optionale Möglichkeit)
- 13: Bewässerung des Wurzelsystems, Drainagerohr, verschiedene Optionen
- 14: Belüftung des Wurzelsystems, Drainagerohr, verschiedene Optionen
- 15: Hauptkomponente des LUWA-Systems
- 16: Wirbelversorgung des Systems

## Patentansprüche

1. Adapter für eine Bewässerungs- und Belüftungsvorrichtung für Gehölze,
wobei der Adapter (11) ein Rohrstück (1) mit einem Anschluss-Düsenhalterteil (2) mit einem Durchflussmengenregler (6) aufweist, wobei dass der Durchflussmengenregler (6) austauschbar ist, **dadurch gekennzeichnet, dass** das Anschluss-Düsenhalterteil (2) eine Einbaurichtung aufweist, die - bezogen auf das lotrecht stehende Rohrstück (1) - tangential zum Rohrstück (1) und schräg nach unten geneigt ist.

2. Adapter nach Anspruch 1,
**dadurch gekennzeichnet,**
**dass** der Adapter (11) eine automatischen Steuerung aufweist.

3. Bewässerungs- und Belüftungsvorrichtung für Gehölze mit einer Einlassöffnung für Luft und Wasser und mit dem Adapter nach Anspruch 1,
**dadurch gekennzeichnet,**
**dass** bei der Bewässerungs- und Belüftungsvorrichtung ein inneres Rohrstück innerhalb eines äußeren Rohrstücks angeordnet ist, dass der Innenbereich des inneren Rohrstücks mit dem Innenbereich des äußeren Rohrstücks im Gasaustauch steht und dass die obere Mündung des inneren Rohrstücks als Einlassöffnung sowohl für Luft als auch für Wasser ausgebildet ist.

4. Bewässerungs- und Belüftungsvorrichtung nach Anspruch 3,
**dadurch gekennzeichnet,**
**dass** zum Gasaustausch Öffnungen im Mantel des inneren Rohrstücks vorgesehen sind.

5. Bewässerungs- und Belüftungsvorrichtung nach Anspruch 3,
**dadurch gekennzeichnet,**
**dass** der Auslass des äußeren Rohrstücks nach unten ausgerichtet ist.

6. Bewässerungs- und Belüftungsvorrichtung nach Anspruch 3,
**dadurch gekennzeichnet,**
**dass** der Auslass des inneren Rohrstücks zur Seite hin ausgerichtet ist.

7. Bewässerungs- und Belüftungsvorrichtung nach Anspruch 3,
**dadurch gekennzeichnet,**
**dass** die Einlassöffnung einen Schmutzfilter aufweist.

8. Bewässerungs- und Belüftungsvorrichtung nach Anspruch 3,
**dadurch gekennzeichnet,**
**dass** die Rohrauslässe mit einem T-Stück versehen sind, so dass mehrere Leitungen oder Ringleitungen ermöglicht werden.

9. Bewässerungs- und Belüftungsvorrichtung nach Anspruch 3,
**dadurch gekennzeichnet,**
**dass** das äußere Rohr nach oben verlängerbar ist und/oder mit einer Abschlusskappe versehen werden kann.

## Claims

1. Adapter for an irrigation and ventilation device for woody plants, the adapter (11) comprising a pipe portion (1) which has a connecting nozzle holder part (2) having a flow regulator (6),
that the flow regulator (6) being replaceable, **characterized in that** the connecting nozzle holder part (2) has an installation direction which, relative to the vertical pipe portion (1), is tangential to the pipe portion (1) and inclined obliquely downward.

2. Adapter according to claim 1,
**characterized in that**
the adapter (11) comprises an automatic control means.

3. Irrigation and ventilation device for woody plants, comprising an inlet opening for air and water and comprising the adapter according to claim 1,
**characterized in that**
in the irrigation and ventilation device, an inner pipe portion is arranged within an outer pipe portion, **in that** the inner region of the inner pipe portion is in gas exchange with the inner region of the outer pipe portion and **in that** the upper mouth of the inner pipe portion is designed as an inlet opening for air and water.

4. Irrigation and ventilation device according to claim 3,
**characterized in that**
openings are provided in the casing of the inner pipe portion for gas exchange.

5. Irrigation and ventilation device according to claim 3,
**characterized in that**
the outlet of the outer pipe portion is directed downward.

6. Irrigation and ventilation device according to claim 3,
**characterized in that**
the outlet of the inner pipe portion is directed to the side.

7. Irrigation and ventilation device according to claim 3,
**characterized in that**
the inlet opening has a dirt filter.

8. Irrigation and ventilation device according to claim 3,
**characterized in that**
the pipe outlets are provided with a T-piece so that a plurality of lines or loop lines are possible.

9. Irrigation and ventilation device according to claim 3,
**characterized in that**
the outer pipe can be extended upward and/or provided with an end cap.

## Revendications

1. Adaptateur pour un dispositif d'irrigation et d'aération pour des plantes ligneuses, dans lequel l'adaptateur (11) présente une pièce tubulaire (1) comportant une partie de support de buse de raccordement (2) comportant un régulateur de débit (6),
dans lequel en ce que le régulateur de débit (6) est interchangeable, **caractérisé en ce que** la partie de support de buse de raccordement (2) présente une direction de montage qui, par rapport à la pièce tubulaire (1) placée à la verticale, est tangente à la pièce tubulaire (1) et inclinée vers le bas.

2. Adaptateur selon la revendication 1,
**caractérisé en ce**
**que** l'adaptateur (11) présente une commande automatique.

3. Dispositif d'irrigation et d'aération pour plantes ligneuses comportant une ouverture d'entrée pour de l'air et de l'eau et comportant l'adaptateur selon la revendication 1,
**caractérisé en ce**
**que,** dans le dispositif d'irrigation et d'aération, une pièce tubulaire intérieure est disposée à l'intérieur d'une pièce tubulaire extérieure, **en ce que** la zone intérieure de la pièce tubulaire intérieure est en liaison par échange de gaz avec la zone intérieure de la pièce tubulaire extérieure **et en ce que** l'embouchure supérieure de la pièce tubulaire intérieure est réalisée sous forme d'ouverture d'entrée aussi bien pour de l'air que pour de l'eau.

4. Dispositif d'irrigation et d'aération selon la revendication 3,
**caractérisé en ce**
**que** des ouvertures sont prévues dans l'enveloppe de la pièce tubulaire intérieure pour l'échange de gaz.

5. Dispositif d'irrigation et d'aération selon la revendication 3,
**caractérisé en ce**
**que** la sortie de la pièce tubulaire extérieure est orientée vers le bas.

6. Dispositif d'irrigation et d'aération selon la revendication 3,
**caractérisé en ce**
**que** la sortie de la pièce tubulaire intérieure est orientée vers le côté.

7. Dispositif d'irrigation et d'aération selon la revendication 3,
**caractérisé en ce**
**que** l'ouverture d'entrée présente un filtre à impuretés.

8. Dispositif d'irrigation et d'aération selon la revendication 3,
**caractérisé en ce**
**que** les sorties de tube sont pourvues d'une pièce en T, de sorte que plusieurs conduites ou conduites circulaires sont possibles.

9. Dispositif d'irrigation et d'aération selon la revendication 3,
**caractérisé en ce**
**que** le tube extérieur peut être prolongé vers le haut et/ou peut être pourvu d'un capuchon de fermeture.
